# EUROPEAN PATENT SPECIFICATION

(11) **EP 0 738 405 B1**
(45) Date of publication and mention of the grant of the patent: **18.02.2009**
(21) Application number: 94925177.1
(22) Date of filing: 02.08.1994
(51) Int. Cl.: G01N 21/27

(54) **SELF-CALIBRATION OF A NDIR GAS SENSOR**
AUTOKALIBRIERUNG EINES NDIR GASSENSORS
AUTO-ETALONNAGE D'UN CAPTEUR DE GAZ INFRAROUGE NON DISPERSIF

(43) Date of publication of application: 23.10.1996
(73) Proprietor: GE Infrastructure Sensing, Inc., 01821 MA Billerica (US)
(72) Inventor: WONG, Jacob, Yauman, Santa Barbara, CA 93110 (US)
(74) Representative: Wagner, Karl H.
(86) International application number: PCT/US1994/008780
(87) International publication number: WO 1996/004607

(56) References cited:
- US-A- 3 329 005
- US-A- 3 681 577
- US-A- 3 797 300
- US-A- 4 355 533
- US-A- 4 678 914
- US-A- 4 820 129
- US-A- 4 836 308
- US-A- 4 875 169
- US-A- 4 927 532
- US-A- 4 941 101
- US-A- 5 098 547
- US-A- 5 297 028
- US-A- 5 347 474

## Description

### Technical Field

The present invention is in the field of measuring instruments, and relates to a method for correcting the measurements made by a nondispersive infrared (NDIR) gas sensor for the effects of long-term drift.

### Background Art

Many kinds of sensors experience long-term drift. Depending on the sensor, this drift may result from various causes, including: gradual chemical changes; a slow build-up of foreign matter, such as might result from exposure to water vapor, smoke, dust, etc.; and, variations in the electrical power supply, including battery degradation over time.

The classic approach to this problem is to provide within the sensor a reference channel that specifically measures the degradation caused by the aforementioned factors. However, provision of this reference channel increases the cost and complexity of the sensor.

The problem of uncompensated drift is especially serious in NDIR sensors in general and especially in carbon dioxide sensors that are used in fire detectors and in ventilation monitors, because these devices are expected to operate for long periods of time, perhaps even years, without attention. These uses require long-term stability to avert excessive false alarm rates and erratic ventilation.

US-A-4,820,129 discloses a fluid pump for use in high performance liquid chromatography having a piston movable in a chamber for drawing fluid into, pressurizing, and delivering the pressurized fluid from the chamber. A pressure transducer in the chamber derives a pressure output signal indicative of chamber pressure. Means is provided for correcting offset errors in the pressure output signal. The fluid pump system comprises fluid pump means including a chamber into which a fluid is drawn, in which said fluid is pressurized, and from which said fluid is delivered, during respective filling, pressurizing and delivery intervals of a cycle of said pump means; means for measuring the pressure of fluid in said chamber and generating a pressure signal indicative thereof; means for generating an error signal during a portion of the chamber fill interval when pressure in said chamber is zero or less than zero, indicating error in zero pressure measurement by said pressure measuring means; and means for summing the error signal generated with the measured pressure signal to derive a corrected pressure output signal for use with said fluid pump system.

US-A-4,355,533 discloses a gas measurement and analysis system having a gas chromatograph which converts a gas mixture from a source to a time varying continuous signal. This signal is sampled and converted to digital form by an analog to digital converter which provides a stream of amplitude dependent digital values at equally spaced time intervals. These sampled signals are applied to a rate of change estimator system which provides an accurate estimate of the time derivative of the sampled signal by means of recursive digital feedback. The output of the estimator system is applied to a processor.

Using the method of the present invention and apparatus for carrying out the method of the present invention described below, a sensor can be made to calibrate itself, and to compensate itself for long-term drift. The method of the present invention is defined in claim 1. The method will be illustrated by an actual example in which a carbon dioxide sensor is used to determine the concentration of carbon dioxide gas in a building. The application of the method to the detection of other gases by the use of NDIR gas sensors is straightforward.

The lowest naturally-occurring concentration of carbon dioxide is found outdoors in rural areas; the concentration there is in the range of 300-500 parts per million.

Inside an office building or a residence, the presence of combustion and of people contribute to the amount of carbon dioxide in the air, so that indoor levels are usually higher than 500 parts per million.

The present invention grew out of prolonged observation of the carbon dioxide level in an office building. It has been discovered that the carbon dioxide level decreases when the people leave the building and exhibits a prolonged quiescent period thereafter. During this quiescent period, the carbon dioxide level approximates that found outdoors, typically 500 parts per million in a city. As the people return to work in the morning, the carbon dioxide level rises again in a predictable manner.

The self-calibration technique of the present invention defined in claim 1 is based on this daily cycle of this example. First, the quiescent portion of the daily cycle is identified. The carbon dioxide level is measured at least once during the quiescent interval, and the measured values from successive days are stored. Each day a best-fitting straight line is determined by statistical methods. The slope of the straight line reflects the long-term drift rate.

The best fitting straight line is extrapolated forward through the next day, and is used to compensate the values measured throughout the next day. Calculation of the best-fitting straight line is repeated each day on a moving basis. Decisions involving the concentration of carbon dioxide are based on the compensated values determined by the above-described process.

The present invention provides a method as set forth in claim 1. Preferred embodiments of the present invention may be gathered from the dependent claims.

A preferred example of the method will be described in detail below with the aid of the accompanying drawings which are provided for purposes of illustration and explanation, and not by way of limitation.

### Brief Description of the Drawings

Figure 1 is a chart illustrating typical variations in carbon dioxide concentration in a building over a period of several days;
Figure 2 is a graph showing a trend in measurements taken during the quiescent portion of successive days;
Figure 3 is a block diagram showing a preferred embodiment of the present invention;
Figure 4 is a flow chart showing a sequence of operations executed by the apparatus of Figure 3 in a first preferred embodiment;
Figure 5 is a flow chart showing a sequence of operations executed by the apparatus of Figure 3 in a second preferred embodiment;
Figure 6 is a flow chart showing a sequence of operations executed by the apparatus of Figure 3 in a third preferred embodiment;
Figure 7 is a flow chart showing a sequence of operations executed by the apparatus of Figure 3 in a fourth preferred embodiment; and,
Figure 8 is a flow chart showing a sequence of operations executed by the apparatus of Figure 3 in each of the preferred embodiments.

### Best Mode for Carrying Out the Invention

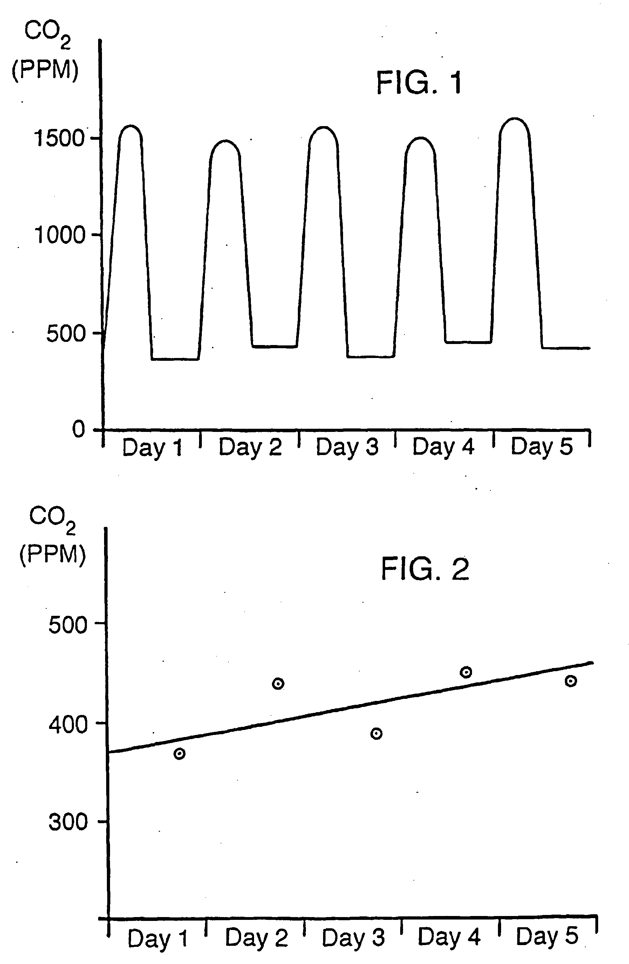

Figure 1 shows how the measured concentration of carbon dioxide varies during the daytime in a building, in a typical situation. Early in the morning, as the workers begin to arrive, the carbon dioxide level increases, and reaches a peak at some time during the day. Thereafter, as the workers leave the office building, the carbon dioxide level decreases, and after working hours, the carbon dioxide concentration stabilizes at a relatively low level referred to herein as a quiescent value. During the quiescent interval, the concentration of carbon dioxide is typically in the range of 300 to 500 parts per million. The effect illustrated in Figure 1 is based on actual data observed in a number of office and business buildings.

Figure 2 shows the effect of sensor drift; the vertical scale is greatly magnified compared to Figure 1. The data points in Figure 2 are hypothetical readings taken by an imperfect drifting sensor during the quiescent interval on successive days. If the measuring instrument were drift-free, the data points would lie rather close to a horizontal line representing the average level of carbon dioxide during the quiescent intervals. Unfortunately, because of the drift present in a real sensor, the data points best fit a straight line having a small slope. This slope is the drift of the sensor; and in general, the drift may be upward or downward. It is the purpose of the present invention to compensate the sensor for this observed drift.

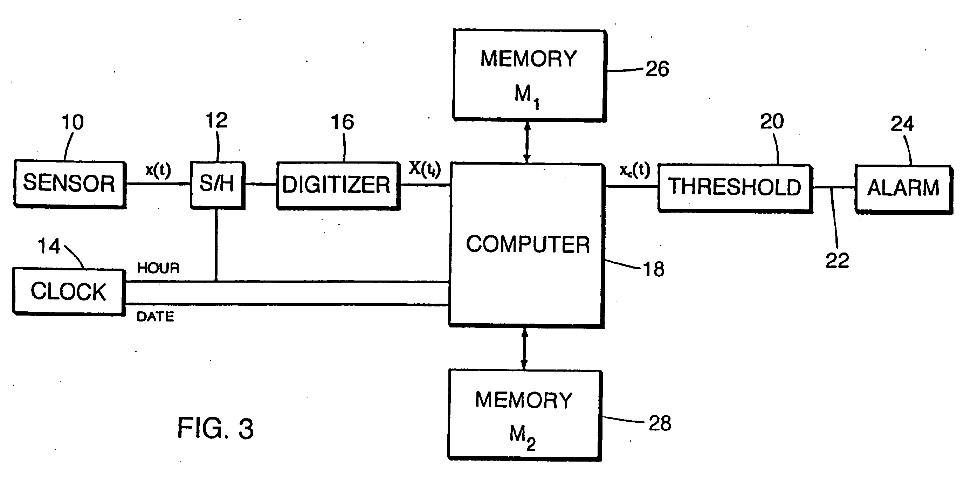

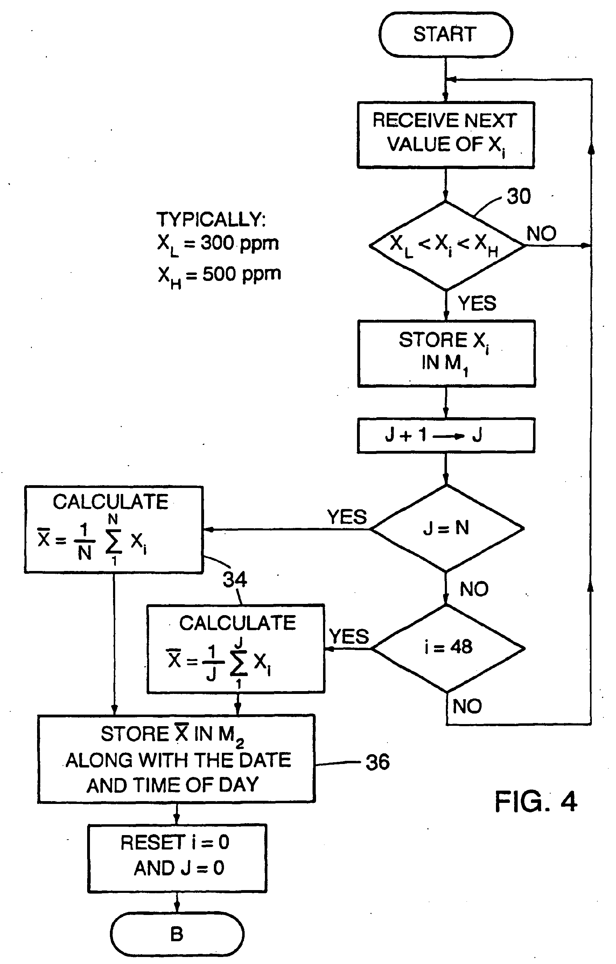

Figure 3 shows the apparatus used in implementing a preferred embodiment of the present invention, and Figures 4 through 8 are flow charts showing successive operations performed by the apparatus of Figure 3.

A digital implementation is used in the preferred embodiment of Figure 3 because it is believed that that approach is the simplest; however, an analog implementation is used in an alternative embodiment.

In the preferred embodiment shown in Figure 3, the sensor 10 produces an output signal x(t) that is sampled periodically by the sample and hold circuit 12 that is enabled by the clock 14. In the preferred embodiment, the sample and hold circuit 12 captures a sample every half hour. Each captured sample, in turn, is converted to a digital form X(tᵢ) by the digitizer 16. These successive digitized data are fed to the computer 18.

The computer 18 operates on the incoming X(tᵢ) to compensate them for drift of the sensor 10, producing the corresponding drift-compensated x_{c}(t). The drift-compensated variable x_{c}(t) is then applied to a threshold circuit 20. When the threshold is exceeded, an alarm signal is produced on the line 22, and that signal is applied to operate an alarm 24 in the preferred embodiment. In an alternative embodiment, the alarm signal on the line 22 may be used to start an electric fan motor. The memories 26 and 28 are associated with the computer 18.

How the computer 18 goes about compensating for drift of the sensor is shown in the flow diagrams of Figures 4 through 8 in which it is assumed, for illustrative purposes, that the variable x(t) is sampled every half hour, i.e., 48 times per day.

The drift-compensating action of the present invention would normally be kept in operation at all times, and therefore the drift that accumulates in any particular day is small relative to the range of values that defines the quiescent interval. Accordingly, the measured values (including the drift component) can reasonably be expected to fall, during part of each day, within the range of values X_{L} to X_{H} that defines the quiescent interval.

Thus, in the preferred embodiment, the incoming digitized samples X(tᵢ) are first tested to determine whether they lie within the range of values that characterize the quiescent interval, as indicated at box 30 in Figure 4.

In the preferred embodiment, a number of the samples X(tᵢ) that have been determined to lie within the range are stored briefly in the memory M₁ 26. After a number of such samples have been stored, their average value is calculated at boxes 34 of Figure 4, and stored in the memory M₂ 28, as the estimate, for that day, of the quiescent value (as shown in box 36 of Fig. 4). In an alternative embodiment, only one sample is taken and it is stored immediately in the memory M₂ 28 as the estimate, for that day, of the quiescent value.

The existence of a quiescent time and corresponding range of values for the carbon dioxide concentration in an office building has been verified experimentally. For variables other than carbon dioxide under a wide range of situations, a prolonged quiescent interval may not exist. Such situations are not intractable and NDIR sensors can be rendered self-calibrating in more situations than was previously thought possible.

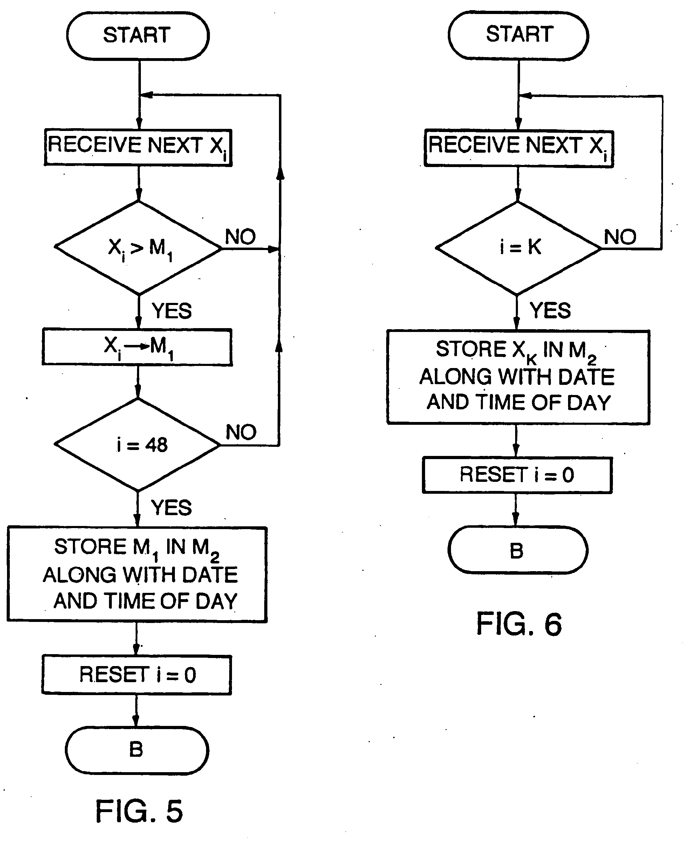

In some situations, it may be known in advance that the variable being measured cannot become less than or greater than some known value. For example, oxygen is not likely to exceed 21%, by weight, of the air. Likewise, water vapor is not likely to exceed a relative humidity of 100%. The flow chart of Figure 5 is applicable to situations where a maximum or minimum is to be found each day.

In still other situations, the value of a variable may be known at a particular hour of each day; for example, a starting value or an initial concentration. In this case, drift of the NDIR sensor can be determined from successive daily measurements of the variable at the particular time, in accordance with the method of a preferred embodiment of the present invention, as shown in Figure 6.

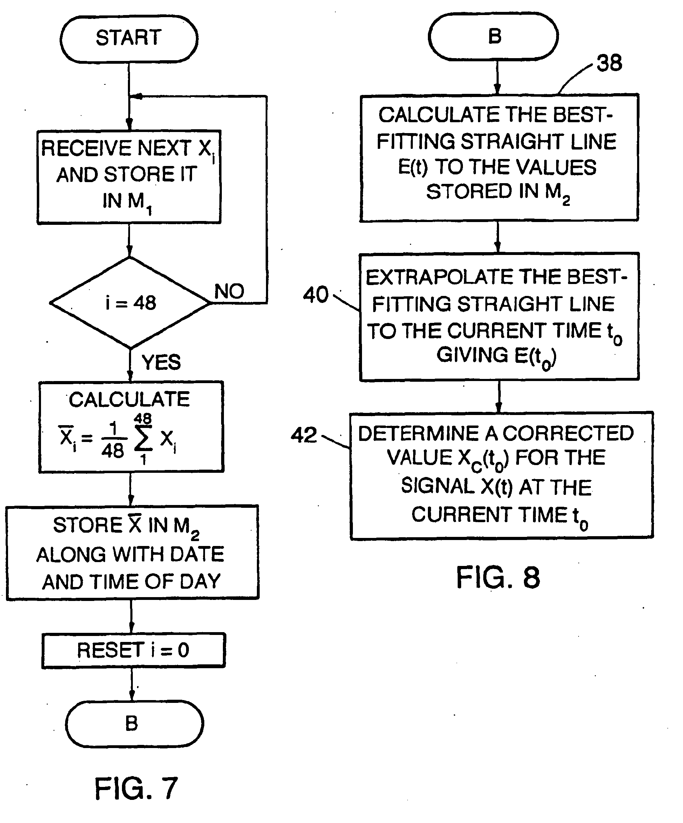

In yet other situations it may be clear from physical considerations that the total amount of gas produced each day is a constant. For example, if a known quantity of methane is burned each day in a thermostat-controlled furnance, then the total amount of water vapor produced is necesssarily limited and determinable, even though the furnance is turned OFF and ON several times during the day. In this situation, the water vapor concentration measurements taken throughout the day would be totaled or averaged, as shown in Figure 7.

The common thread that connects these examples is the idea that each day the NDIR sensor measurements are used to produce, through the computer 18, an estimate of a variable whose true value is known, at least approximately, by some other means.

The estimates found from the sensor measurements each day are stored in the memory M₂ 28 day by day until a selected maximum number H of the daily estimates have been stored. Thereafter, each time a new estimate is stored, the oldest one is discarded from the memory M₂ 28. The maximum number H is chosen, based on well-known statistical theory, to yield a desired degree of accuracy in estimating the drift.

At the beginning of each day, starting with the third day, the straight line that best fits the stored estimates, is calculated and its slope is estimated, as indicated at box 38 of Fig. 8. Since the variable is presumed to have the same value each day at the time the sample is taken, the slope of the best-fitting straight line is ascribed to drift of the instrument. Using the slope thus estimated, the raw measurements taken throughout the day are corrected for the drift, as shown at boxes 40 and 42 of Fig. 8.

The drift-corrected measurements that are the output of the computer 18 are applied to the threshold circuit 20, and if the threshold is exceeded, an alarm signal is generated that is used to produce an audible or visible alarm. In another embodiment the "alarm" signal is applied to enable the operation of a fan or blower.

Thus, there has been described apparatus and a method for autonomous self-calibration of a sensor so as to increase its stability over time by correcting the raw output x(t) of the sensor to compensate for drift of the sensor. The technique is predicated on the daily or cyclical recurrence of a known value of the variable being sensed.

The foregoing detailed description is illustrative of several embodiments of the invention, and it is to be understood that additional embodiments thereof will be obvious to those skilled in the art. The embodiments described herein together with those additional embodiments are considered to be within the scope of the invention, defined by the claims.

### Industrial Applicability

Sensors' of all types can be compensated for drift by use of the describe method, provided the sensed variable is known to return periodically to a particular value. Compensation for drift is most valuable in sensors that are required to operate for long periods of time without attention, such as fire detectors and environmental monitoring sensors.

## Claims

1. A method for drift compensation of a nondispersive infrared gas sensor used for measuring a cyclical variable X that is known to lie within a known range that defines a quiescent interval extending from a minimum value X_{L} to a maximum value X_{H} during a part of each cycle, said sensor producing an electrical signal X(t) representative of the instantaneous value of X at time t, said method **characterized by** the steps of:
a) determining when X(t) is between X_{L} and X_{H} where X_{L} and X_{H} denote the values of X(t) corresponding to X_{L} and X_{H} respectively;
b) sampling X(t) during each cycle when X(t) is between X_{L} and X_{H} within the quiescent interval and storing a representative quiescent value of X(t) for each cycle;
c) determining a linear function that best fits the representative quiescent values of X(t) that were stored in a number of successive cycles;
d) extrapolating the linear function that best fits the representative quiescent values of X(t) to the present time to, thereby obtaining X₁(t₀); and
e) determining a corrected value X_{c}(t₀) for the signal X(t) at the present time to which is compensated for sensor drift.

2. The method for drift compensation of the nondispersive infrared gas sensor of claim 1, wherein the sensor is used for measuring a cyclical variable X that is known to attain a constant maximum value X_{MAX} as the quiescent value, during each cycle, said method **characterized by** the steps of:
f) determining for each cycle the maximum value X_{MAX};
g) storing the maximum values determined in successive cycles; and
h) determining a linear function that best fits the maximum values stored in a number of successive cycles; and
i) extrapolating the linear function that best fits the maximum values to the present time t₀, thereby obtaining X₂(t₀).

3. The method for drift compensation of the nondispersive infrared gas sensor of claim 1, wherein the sensor is used for measuring a cyclical variable X that is known to attain a constant minimum value X_{MIN} as the quiescent value during each cycle, said method **characterized by** the steps of:
f) determining for each cycle the minimum value X_{MIN} ;
g) storing the minimum values determined in successive cycles;
h) determining a linear function that best fits the minimum values stored in a number of successive cycles; and
i) extrapolating the linear function that best fits the minimum values to the present time t₀, thereby obtaining X₃(t₀).

4. The method for drift compensation of the nondispersive infrared gas sensor of claim 1, wherein the sensor is used for measuring a cyclical variable X that is known to attain a known particular value X_{κ} as the quiescent value at some know phase of each cycle, said method **characterized by** the steps of:
f) sampling the value of X(t) once in each cycle at said known phase of each cycle;
g) storing the values sampled at said known phase in successive cycles;
h) determining a linear function that best fits the values at said known phase stored in a number of successive cycles; and
i) extrapolating the linear function that best fits the values at said known phase to the present time t₀, thereby obtaining X₄(t₀).

5. The method for drift compensation of the nondispersive infrared gas sensor of claim 1, wherein the sensor is used for measuring a cyclical variable X that is known to have the same known average value X as the quiescent value for each cycle, said method **characterized by** the steps of:
f) determining the average value of X for each cycle;
g) storing the average values determined in step f) for each cycle;
h) determining a linear function that best fits the average values of X stored in a number of successive cycles; and
i) extrapolating the linear function that best fits the average values of X to the present time to, thereby obtaining X₅(t₀).

## Patentansprüche

1. Ein Verfahren zur Drift-Kompensation von einem nicht-dispersiven infraroten Gassensor, der genutzt wird zum Messen einer zyklischen Variablen X, von der bekannt ist, dass sie innerhalb eines bekannten Bereichs liegt, der ein Ruheintervall definiert, das sich von einem minimalen Wert X_{L} zu einem maximalen Wert X_{H} während eines Teils von jedem Zyklus erstreckt, wobei der Sensor ein elektrisches Signal X(t) erzeugt, das repräsentativ ist für den Momentanwert von X zu einer Zeit t, wobei das Verfahren durch die folgenden Schritte **gekennzeichnet** ist:
a) Bestimmen wenn X(t) zwischen X_{L} und X_{H} ist, wobei X_{L} und X_{H} die Werte von X(t) entsprechend zu X_{L} bzw. X_{H} bezeichnen;
b) Abtasten von X(t) während jedes Zyklus, wenn X(t) zwischen X_{L} und X_{H} innerhalb des Ruheintervalls ist und Speichern eines repräsentativen Ruhewerts von X(t) für jeden Zyklus;
c) Bestimmen einer linearen Funktion, die am besten übereinstimmt mit bzw. passt zu den repräsentativen Ruhewerten von X(t), die in einer Anzahl von aufeinanderfolgenden Zyklen gespeichert worden sind;
d) Extrapolieren der linearen Funktion, die am besten passt zu den repräsentativen Ruhewerten von X(t) zur aktuellen Zeit um **dadurch** X₁(t₀) zu erlangen; und
e) Bestimmen eines korrigierten Werts X_{c}(t₀) für das Signal X(t) zur aktuellen Zeit t₀, welcher bezüglich der Sensor-Drift kompensiert ist.

2. Verfahren zur Drift-Kompensation von dem nicht-dispersiven infraroten Gassensor nach Anspruch 1, wobei der Sensor genutzt wird zum Messen einer zyklischen Variablen X, von der bekannt ist, dass sie einen konstanten maximalen Wert X_{MAX} als den Ruhewert während jedes Zyklus erreicht, wobei das Verfahren **gekennzeichnet ist durch** die folgenden Schritte:
f) Bestimmen für jeden Zyklus des maximalen Werts X_{MAX};
g) Speichern der in aufeinanderfolgenden Zyklen bestimmten maximalen Werte; und
h) Bestimmen einer linearen Funktion die am besten passt zu den maximalen Werten, die in einer Anzahl von aufeinanderfolgenden Zyklen gespeichert wurden; und
i) Extrapolieren der linearen Funktion, die am besten passt zu den maximalen Werten zu der aktuellen Zeit t₀, um **dadurch** X₂ von t₀ zu erlangen.

3. Verfahren zur Drift-Kompensation von dem nicht-dispersiven infraroten Gassensor nach Anspruch 1, wobei der Sensor genutzt wird zum Messen einer zyklischen Variablen X, von der bekannt ist, dass sie einen konstanten minimalen Wert X_{MIN} als den Ruhewert während jedes Zyklus erlangt, wobei das Verfahren **gekennzeichnet ist durch** die folgenden Schritte:
f) Bestimmen des minimalen Werts X_{MIN} für jeden Zyklus
g) Speichern der in aufeinanderfolgenden Zyklen bestimmten minimalen Werte;
h) Bestimmen einer linearen Funktion, die am besten passt zu den minimalen Werten, die in einer Anzahl von aufeinanderfolgenden Zyklen gespeichert wurden; und
i) Bestimmen einer linearen Funktion, die am besten passt zu den minimalen Werten zu der aktuellen Zeit t₀, **dadurch** X₃(t₀) erlangend.

4. Verfahren zur Drift-Kompensation von dem nicht-dispersiven infraroten Gassensor nach Anspruch 1, wobei der Sensor genutzt wird zum Messen einer zyklischen Variablen X, von der bekannt ist, dass sie einen bestimmten speziellen Wert X_{K} als den Ruhewert für eine bestimmte Phase von jedem Zyklus erreicht, wobei das Verfahren **gekennzeichnet ist durch** die folgenden Schritte:
f) Abtasten des Werts von X(t) einmal in jedem Zyklus bei der bekannten Phase von jedem Zyklus;
g) Speichern der, bei der bekannten Phase in aufeinanderfolgenden Zyklen, abgetasteten Werte;
h) Bestimmen einer linearen Funktion, die am besten passt zu den Werten, die gespeichert wurden bei der bekannten Phase in einer Anzahl von aufeinanderfolgenden Zyklen; und
i) Extrapolieren der linearen Funktion, die am besten passt zu den Werten bei der bekannten Phase zur aktuellen Zeit t₀, um **dadurch** X₄(t₀) zu erlangen.

5. Verfahren zur Drift-Kompensation von dem nicht-dispersiven infraroten Gassensor nach Anspruch 1, wobei der Sensor genutzt wird zum Messen einer zyklischen Variable X, von der bekannt ist, dass sie den gleichen Durchschnittswert X als den Ruhewert für jeden Zyklus besitzt, wobei das Verfahren **gekennzeichnet ist durch** die folgenden Schritte:
f) Bestimmen des Durchschnittswerts von X für jeden Zyklus;
g) Speichern, der in dem Schritt f) für jeden Zyklus bestimmten Durchschnittswerte;
h) Bestimmen einer linearen Funktion, die am besten passt zu den Durchschnittswerten von X die in einer Anzahl von aufeinanderfolgenden Zyklen gespeichert wurden; und
i) Extrapolieren der linearen Funktion, die am besten passt zu den Durchschnittswerten von X zur aktuellen Zeit, um **dadurch** X₅(t₀) zu erlangen.

## Revendications

1. Procédé de compensation de la dérive d'un détecteur de gaz à infrarouge non dispersif utilisé pour mesurer une variable cyclique X connue pour se trouver dans une plage connue qui définit un intervalle de repos s'étendant à partir d'une valeur minimum X_{L} jusqu'à une valeur maximum X_{H} pendant une partie de chaque cycle, ledit détecteur produisant un signal électrique X(t) représentatif de la valeur instantanée de X à l'instant t, le procédé étant **caractérisé par** les étapes suivantes :
a) déterminer le moment où X(t) est compris entre X_{L} et X_{H}, X_{L} et X_{H} indiquant les valeurs de X(t) correspondant à X_{L} et X_{H} respectivement ;
b) échantillonner X(t) pendant chaque cycle lorsque X(t) se trouve entre X_{L} et X_{H} dans l'intervalle de repos et mémoriser une valeur de repos représentative de X(t) pour chaque cycle ;
c) déterminer une fonction linéaire qui approxime le mieux les valeurs de repos représentatives de X(t) qui ont été mémorisées dans un certain nombre de cycles successifs ;
d) extrapoler la fonction linéaire qui approxime le mieux les valeurs de repos représentatives de X(t) pour l'instant présent pour obtenir ainsi X₁(t₀) ; et
e) déterminer une valeur corrigée X_{c}(t₀) pour le signal X (t) à l'instant présent t₀ qui est compensée en ce qui concerne la dérive du détecteur.

2. Procédé de compensation de la dérive du détecteur de gaz à infrarouge non dispersif selon la revendication 1, dans lequel le détecteur est utilisé pour mesurer une variable cyclique X connue pour atteindre une valeur maximum constante X_{MAX} en tant que valeur de repos pendant chaque cycle, le procédé étant **caractérisé par** les étapes suivantes :
f) déterminer pour chaque cycle la valeur maximum X_{MAX} ;
g) mémoriser les valeurs maximum déterminées dans des cycles successifs ; et
h) déterminer une fonction linéaire qui approxime le mieux les valeurs maximum mémorisées dans un certain nombre de cycles successifs ; et
i) extrapoler la fonction linéaire qui approxime le mieux les valeurs maximum pour l'instant présent t₀, pour obtenir ainsi X₂(t₀).

3. Procédé de compensation de la dérive du détecteur de gaz à infrarouge non dispersif selon la revendication 1, dans lequel le détecteur est utilisé pour mesurer une variable cyclique X connue pour atteindre une valeur minimum constante X_{MIN} en tant que valeur de repos pendant chaque cycle, le procédé étant **caractérisé par** les étapes suivantes :
f) déterminer pour chaque cycle la valeur minimum X_{MIN}
g) mémoriser les valeurs minimum déterminées dans des cycles successifs ;
h) déterminer une fonction linéaire qui approxime le mieux les valeurs minimum mémorisées dans un certain nombre de cycles successifs ; et
i) extrapoler la fonction linéaire qui approxime le mieux les valeurs minimum pour l'instant présent t₀, pour obtenir ainsi X₃(t₀).

4. Procédé de compensation de la dérive du détecteur de gaz à infrarouge non dispersif selon la revendication 1, dans lequel le détecteur est utilisé pour mesurer une variable cyclique X connue pour atteindre une valeur particulière X_{K} en tant que valeur de repos à certaines phases connues de chaque cycle, le procédé étant **caractérisé par** les étapes suivantes :
f) échantillonner la valeur de X(t) une fois par cycle au niveau de la phase connue de chaque cycle ;
g) mémoriser les valeurs échantillonnées au niveau de ladite phase connue dans des cycles successifs ;
h) déterminer une fonction linéaire qui approxime le mieux les valeurs au niveau de la phase connue mémorisée dans un certain nombre de cycles successifs ; et
i) extrapoler la fonction linéaire qui approxime le mieux les valeurs au niveau de la phase connue pour l'instant présent t₀, pour obtenir ainsi X₄(t₀).

5. Procédé de compensation de la dérive du détecteur de gaz à infrarouge non dispersif selon la revendication 1, dans lequel le détecteur est utilisé pour mesurer une variable cyclique X qui est connue pour avoir la même valeur moyenne connue X en tant que valeur de repos pour chaque cycle, le procédé étant **caractérisé par** les étapes suivantes :
f) déterminer la valeur moyenne de X pour chaque cycle ;
g) mémoriser les valeurs moyennes déterminées à l'étape f) pour chaque cycle ;
h) déterminer une fonction linéaire qui approxime le mieux les valeurs moyennes de X mémorisées dans un certain nombre de cycles successifs ; et
i) extrapoler la fonction linéaire qui approxime le mieux les valeurs moyennes de X pour l'instant présent t₀ pour obtenir ainsi X₅(t₀).
